# EUROPEAN PATENT SPECIFICATION

(11) **EP 3 059 049 B1**
(45) Date of publication and mention of the grant of the patent: **18.12.2019**
(21) Application number: 15155385.6
(22) Date of filing: 17.02.2015
(51) Int. Cl.: H02K 7/14, H02K 11/33, B24B 23/06, B24B 55/05, H02K 9/06

(54) **Electric handheld sanding tool providing improved cooling efficiency**
Tragbares elektrisches Schleifwerkzeug mit verbesserter Kühleffizienz
Outil de ponçage portable électrique assurant une meilleure efficacité de refroidissement

(43) Date of publication of application: 24.08.2016
(73) Proprietor: X'Pole Precision Tools, Inc., 320 Zhongli City, Taoyuan County (TW)
(72) Inventor: Chen, Bach Pangho, Claremont, 91711 (US)
(74) Representative: 2K Patentanwälte Blasberg Kewitz & Reichel

(56) References cited:
- EP-A2- 2 802 063
- WO-A1-2014/050940
- CN-Y- 201 371 407
- JP-A- H09 140 095
- JP-A- 2014 097 570
- 3m Abrasive Systems Division: "3M File Belt Sander Instruction Manual", , 25 February 2014 (2014-02-25), pages 1-9, XP055186306, Retrieved from the Internet: URL:http://multimedia.3m.com/mws/media/103 2439O/3m-file-belt-sander-1-8-3-4x18-24-in struction-manual.pdf [retrieved on 2015-04-28]

## Description

### FIELD OF THE INVENTION

The present invention relates to an electric handheld sanding tool and particularly to an electric handheld sanding tool equipped with a cooling fan between an electric motor and a circuit module to provide cooling to the electric motor and the circuit module to improve cooling efficiency.

### BACKGROUND OF THE INVENTION

Progress in mechanical hand tool technology has gradually adopted electric power as the main driving source of hand tools to replace those driven by pneumatic power to overcome the problem of the pneumatic hand tools, which are unable to function in high speeds. However, the mechanical hand tool using the electric power rather than the pneumatic power encounters a problem of element cooling efficiency. In the past the pneumatic mechanical hand tool could perform heat exchange through simultaneously pulling working air at the same time without accumulating waste heat in the mechanical hand tool. But the electric mechanical hand tool uses an electric motor to get working power. In the event that the mechanical hand tool does not have a heat convection design the electric motor and other related elements could easily accumulate waste heat and result in abnormal conditions.

Hence, the present mechanical hand tool industry has devoted a great deal of research and efforts trying to improve cooling efficiency of the hand tools. For instance, China patent No. CN201371407Y on which the preamble of appended claim 1 is based and European patent No. EP1285727B1 disclose a technique by deploying an air fan in a casing of a mechanical hand tool. However, the air fan mainly aims to provide cooling of a sanding element of the mechanical hand tool by dispersing waste heat generated during high speed spinning of the sanding element. But on the electric hand tool driven electrically, aside from the waste heat generated by the sanding element, the electric motor and its related control module also generate waste heat. If the electric motor and the related control module do not have proper cooling waste heat will accumulate in the casing of the mechanical hand tool and temperature will rise, and could result in the electric motor and the control module unable to function at a desired working temperature, and abnormal operation tends to take place easily.

CN 201 371 407 Y discloses an electric sanding handheld tool according to the preamble of claim 1. It is not disclosed that the baseboard of the cooling fan is coupled with the first transmission portion, i.e. that portion where the controller is located. Rather, the fan is coupled with the second transmission shaft, i.e. at the same end where also the grinder bottom plate sandpaper is provided. The cooling fan does not seem to comprise a baseboard in the sense of the present application. Notwithstanding, the colling fan does not comprise an airflow orifice formed in the base-board of the cooling to allow an airflow to flow through the airflow orifice. Rather, the airflow enters the housing of the tool via a vent, flows in axial direction along a transmission shaft, flows along the outer periphery of the electric motor and is deflected by a curved hub portion of the cooling fan in a direction perpendicular to the direction of the transmission shaft, and then exits the housing.

JP 2014 0957570 A discloses a handheld electric grinding tool wherein two air flow paths are formed as follows: The first airflow path extends from an air inlet (at the location of coupling of the grinder with the handgrip) along the outer periphery of the electric motor. At the front end of the electric motor the airflow direction is reversed, and the airflow leaves the housing via air outlet orifices provided in the handgrip. The second airflow path extends from air inlet apertures formed in the handgrip to the outlet orifices provided in the handgrip. Here, the airflow flows along the control board and is then expelled by the coolings fins of a cooling fan. The first airflow only cools the electric motor, whereas the second airflow only cools the control board.

### SUMMARY OF THE INVENTION

It is an object of the present invention to provide an enhanced electric sanding handheld tool having an improved cooling efficiency. This problem is solved by an electric sanding handheld tool according to claim 1. Further advantageous embodiments are the subject-matter of the dependent claims.

To achieve the foregoing object the present invention provides an electric handheld sanding tool with improved cooling efficiency. It includes a host body and a sanding assembly. The host body includes a body and a handgrip extended from the body. The body has a housing space inside. The sanding assembly includes an electric motor located in the housing space to output driving power through a transmission shaft and a circuit module connected to an external power to control operation of the electric motor. The circuit module includes a control unit located in the body coaxial with the electric motor and a power supply unit located in the handgrip and connected to the control unit to get working power from the external power to perform power transformation. One end of the transmission shaft where the control unit is located is defined as a first transmission portion and another end of the transmission shaft opposing (opposite) the control unit is defined as a second transmission portion. The second transmission portion is connected to a sanding element which is exposed outside the host body and driven by the transmission shaft to generate sanding motion. The cooling fan has a baseboard, an axial coupling portion located on the baseboard and coupled with the first transmission portion, a plurality of vanes located on the baseboard and centered about the axial coupling portion in a radial fashion, and an airflow orifice located on the baseboard. The body of the host body includes at least one air outlet corresponding to the vanes. The body further has at least one air inlet opened nearby to either of the control unit and the electric motor

According to the invention, the cooling fan is located on the first transmission portion and disposed between the control unit and the electric motor. The cooling fan further comprises a plurality of connection ribs centered about the axial coupling portion and an airflow orifice located on the baseboard. The airflow orifice is disposed around the axial coupling portion and defined by the vanes and the connection ribs. The transmission shaft is driven by the control unit to synchronously drive the sanding element and the cooling fan through the first transmission portion and the second transmission portion so that the vanes spin to draw cold airflow through the air inlet to pass through the airflow orifice to dispel operation heat generated by the electric motor and the control unit through the air outlet.

In one embodiment the body of the host body has a first air inlet (113) corresponding to the control unit (221) and a second air inlet (114) corresponding to the electric motor.

In another embodiment the control unit has a heat transmission element facing the cooling fan to dispel the operation heat generated by the control unit through the cold airflow drawn in by the vanes.

In yet another embodiment.

In yet another embodiment the electric motor includes a bearing located on at least either one of the first transmission portion and the second transmission portion.

In yet another embodiment the baseboard of the cooling fan is located at one side thereof facing the control unit, and the vanes are located at another side facing the electric motor.

In yet another embodiment the baseboard of the cooling fan is located at one side thereof facing the electric motor, and the vanes are located at another side facing the control unit.

In yet another embodiment the baseboard has a plurality of connection ribs centered about the axial coupling portion to define the airflow orifice.

In yet another embodiment the sanding element is a sand cloth belt which is perpendicular to the axial direction of the electric motor and extended to expose outside the host body.

In yet another embodiment the electric sanding handheld tool further includes a dust cover coupled with the host body and partially covered the sanding element.

In yet another embodiment the dust cover includes a hood and an opening formed on the hood to allow the sanding element to pass through.

In yet another embodiment the hood has an air inlet corresponding to the second transmission portion, and the electric sanding handheld tool includes an auxiliary air fan coupled on the second transmission portion corresponding to the air inlet and driven by the transmission shaft to draw the cold airflow from the air inlet to dispel operation heat generated by the sanding element through the opening.

The invention, by means of the structure set forth above, compared with the conventional techniques, can provide advantageous features as follows:
1. By deploying the cooling fan between the electric motor and the control unit, and through the corresponding air outlet and the air inlet, while the electric motor is spinning the cooling fan can synchronously draw cold airflow to disperse heat from the electric motor and the control unit.
2. The heat transmission element is located corresponding to the cooling fan, hence the spinning vanes can provide the cold airflow to disperse operation heat of the control unit.
3. The invention provides an auxiliary air fan moved synchronously with the transmission shaft to provide cooling for the sanding element located on the second transmission portion, therefore can reduce operation heat generated by the sanding element during sanding motion.

### BRIEF DESCRIPTION OF THE DRAWINGS

FIG. 1 is a perspective view of an embodiment of the invention.
FIG. 2 is a sectional view of an embodiment of the invention.
FIG. 3 is a fragmentary sectional view of an embodiment of the invention.
FIG. 4 is a schematic view of the cooling fan of an embodiment of the invention.
FIG. 5 is a cross sectional view taken on line A-A in FIG. 3.
FIG. 6 is another cross sectional view taken on line A-A in FIG. 3.
FIG. 7 is a sectional view of another embodiment of the invention.

### DETAILED DESCRIPTION OF THE PREFERRED EMBODIMENTS

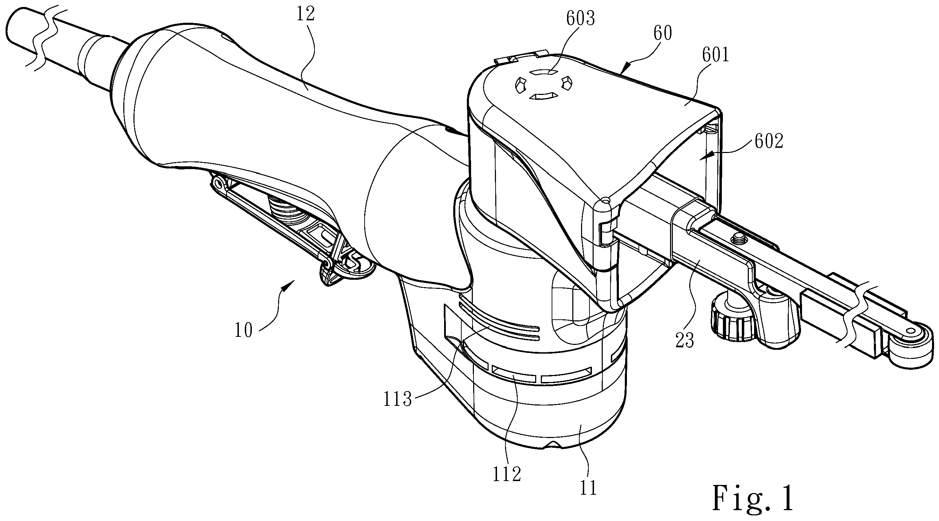

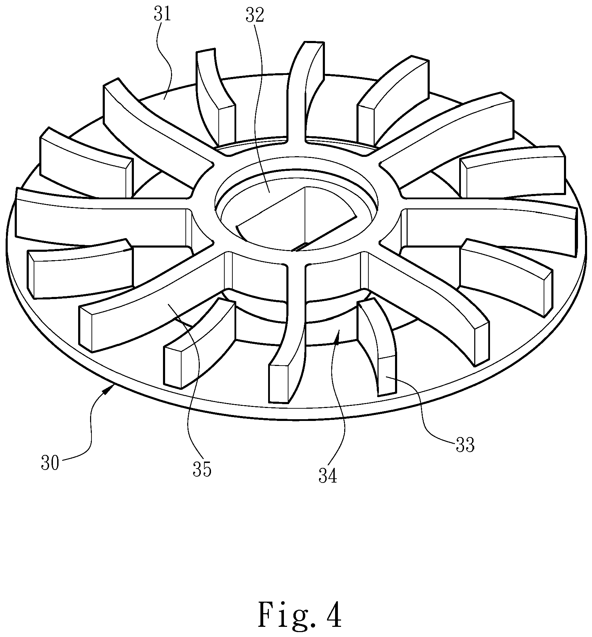

Please referring to FIGS. 1 through 5, the present invention aims to provide an electric sanding handheld tool with improved cooling efficiency. It includes a host body 10 and a sanding assembly 20. In one embodiment the host body 10 can be made of metal or a plastic material through mechanical fabrication, and can be formed in a profile according to user's requirements or customary design. More specifically, the host body 10 includes a body 11 and a handgrip 12 extended from the body 11. The body 11 has a housing space 111 inside that can be extended into the handgrip 12. The sanding assembly 20 includes an electric motor 21 located in the housing space 111, a circuit module 22 coaxial with the electric motor 21 and connected to external power to control operation of the electric motor 21, and a sanding element 23 exposed outside the host body 10 and driven by the electric motor 21 to generate sanding motion. Furthermore, the circuit module 22 includes a control unit 221 located in the body 11 and coaxial with the electric motor 21 and a power supply unit 222 located in the handgrip 12 and connected to the control unit 221 to get working power from the external power to perform power transformation. Thus, after the circuit module 22 is electrically energized operation heat being generated can be prevented from accumulating in the circuit module 22. Moreover, the circuit module 22 has a heat transmission element 223 facing a cooling fan 30. The heat transmission element 223 can further be a cooling fin located on an electronic element 224 contained in the circuit module 22 to transmit operation heat generated by the electronic element 223 outside after being electrically energized to avoid the electronic element 224 from failure in normal operation because of heat accumulation. The electronic element 224 can be an electronic switch included in the circuit module 22, such as a metal oxide semiconductor field effect transistor (MOSFET) or the like.

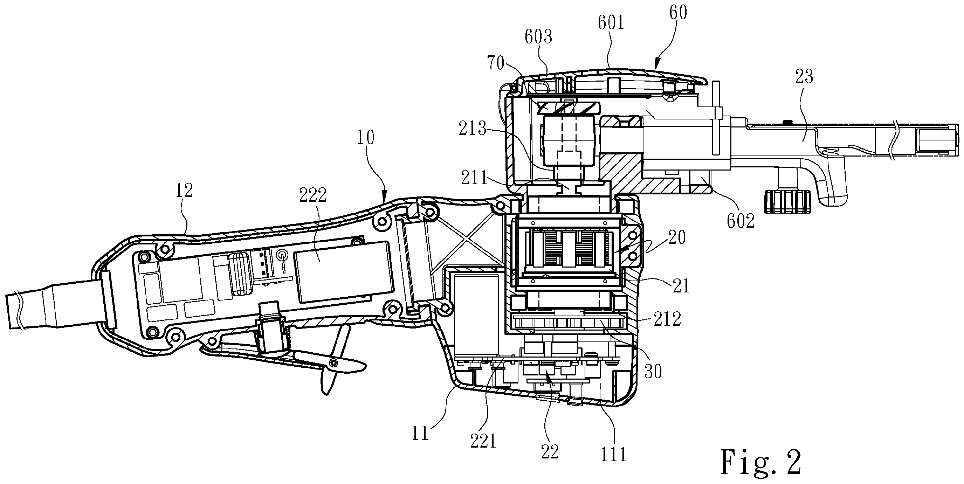

Based on the structure set forth above, the electric motor 21 has a transmission shaft 211 to output driving power. The transmission shaft 211 has a first transmission portion 212 defined at one end where the circuit module 22 is located and a second transmission portion 213 at another end opposing the circuit module 22. The second transmission portion 213 is exposed outside the body 10 and coupled with the sanding element 23. When the electric motor 21 is in operation it drives the sanding element 23 to generate sanding motion. Also referring to FIGS. 1 and 2, in one embodiment the sanding element 23 is a sand cloth belt perpendicular to the axial direction of electric motor 21 and extended to expose outside the host body 10. When the sanding element 23 is driven by the electric motor 21 to perform sanding motion its distal end can provide sanding operation on a single point of an object to run through the object, hence can perform a dismantle operation for a rigid and tough object. Moreover, in another embodiment at least either one of the first transmission portion 212 and the second transmission portion 213 can have a bearing 214 mounted thereon.

In addition, the cooling fan 30 is provided on the first transmission portion 212 between the circuit module 22 and the electric motor 21. The cooling fan 30 includes a baseboard 31, an axial coupling portion 32 located on the baseboard 31 and connected to the first transmission portion 212, a plurality of vanes 33 centered about the axial coupling portion 32 and arranged in a radial fashion, and an airflow orifice 34. The cooling fan 30 can be adjusted in position according to airflow design. In one embodiment the baseboard 31 is located at one side of the cooling fan 30 facing the circuit module 22 and the vanes 33 are located at another side facing the electric motor 21; or the baseboard 31 is located at one side of the cooling fan 30 facing the electric motor 21 and the vanes 33 are located at another side facing the circuit module 22. Moreover, the baseboard 31 can have a plurality of connection ribs 35 centered about the axial coupling portion 32 to define the airflow orifice 34. In addition, the body 11 has at least one air outlet 112 corresponding to the vanes 33, and at least one air inlet 113 corresponding to either of the circuit module 22 and the electric motor 21.

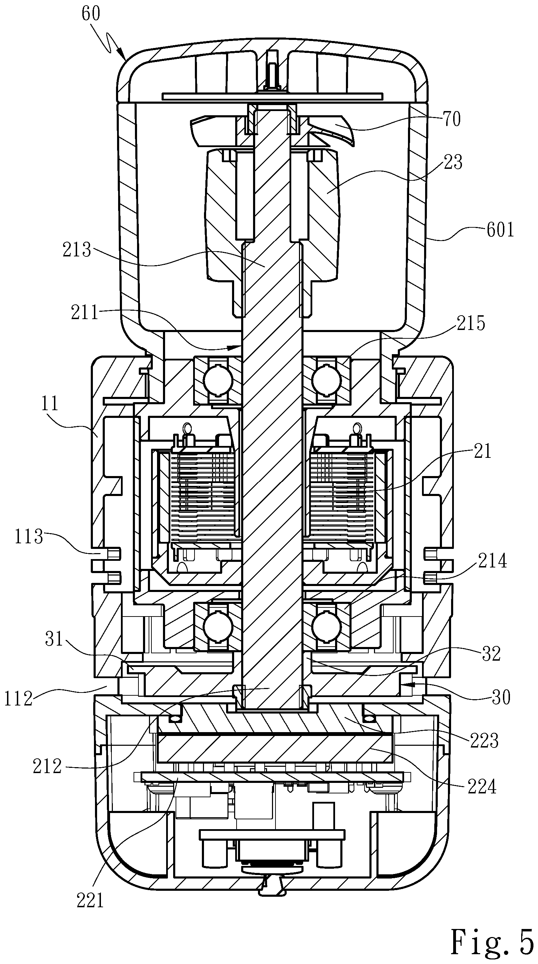

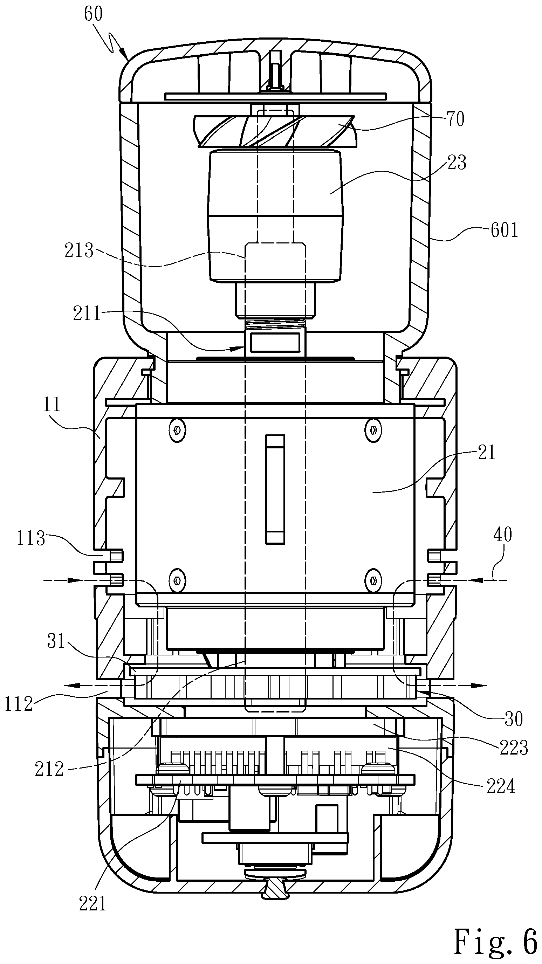

Based on the implementation fashion of the air inlet 113 corresponding to the electric motor 21 an embodiment example is discussed as follows. Referring to FIGS. 5 and 6, after the electric sanding handheld tool has got the working power from the external power, and the circuit module 22 is triggered through a control measure to drive the electric motor 21 running, the transmission shaft 211 also drives the sanding element 23 and the cooling fan 30 through the first transmission portion 212 and the second transmission portion 213 to spin synchronously. Namely, the cooling fan 30 is driven by the transmission shaft 211 to spin with the sanding element 23. When the vanes 33 are spinning the air inlet 113 draws in cold airflow to pass through the airflow orifice 34 and dispel operation heat generated by the electric motor 21 and the circuit module 22 through the air outlet 112. The flow path of the cold airflow is indicated by notation 40 in FIG. 6. Moreover, spinning of the cooling fan 30 forms airflow in the housing space 111 to disperse waste heat of the bearing 214 located on the first transmission portion 212 that is generated by friction of the bearing 214 while the transmission shaft 211 is spinning. Furthermore, in the aforesaid embodiment the circuit module 22 has the heat transmission element 223 faced the cooling fan 30, the cold airflow formed by spinning of the cooling fan 30 can further provide cooling for the heat transmission element 223, thereby physically disperse the operation heat generated by the circuit module 22.

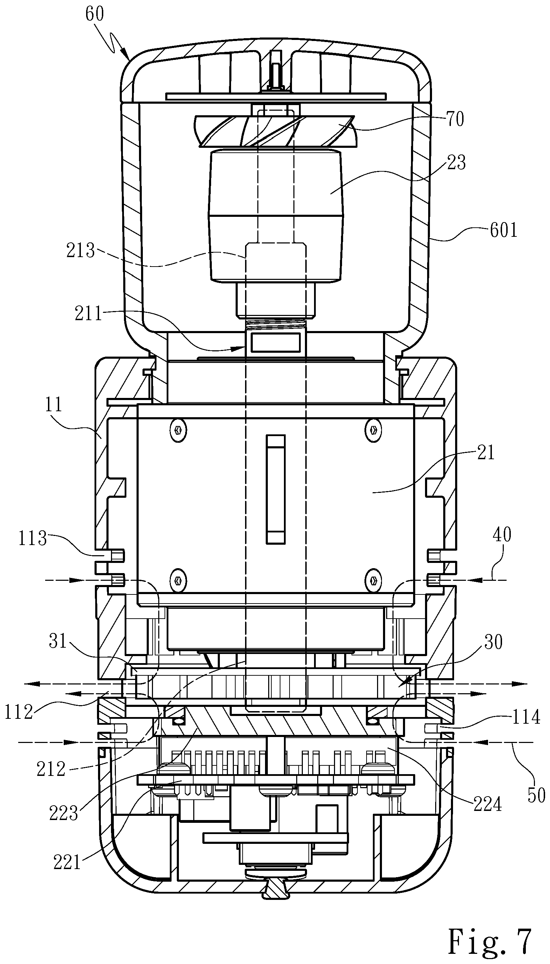

In addition, referring to FIG. 7, in another embodiment the body 11 has the air inlets 113 and 114 corresponding respectively to the electric motor 21 and the circuit module 22. When the vanes 33 are spinning two airflows are formed in the housing space 111; one cold airflow enters the housing space 111 through the air inlet 113 corresponding to the electric motor 21, then passes through the airflow orifice 34 to dispel operation waste heat generated by the electric motor 21 through the air outlet 112, as shown by notation 60 in FIG. 6. Another cold airflow enters the housing space 111 via other air inlet 114 corresponding to the circuit module 22 and dispels the operation waste heat generated by the circuit module 22 through the air outlet 112, as shown by notation 50 in FIG. 6. Thus, through multiple sets of air inlets 113 and 114 the external cold airflow can enter the body 11 through multiple paths to provide improved cooling effect for the electric motor 21 and the circuit module 22.

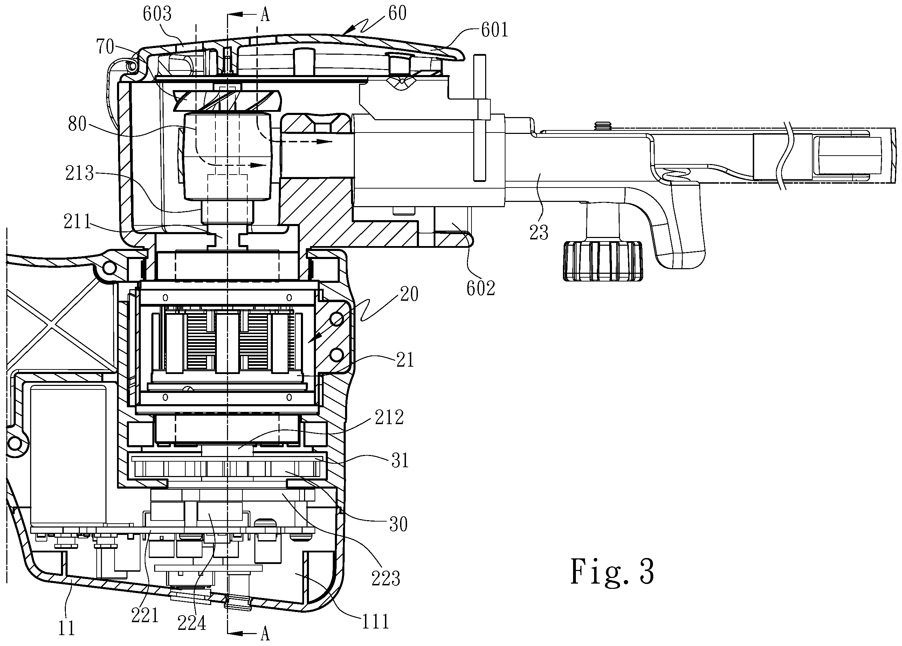

Referring to FIGS. 1 through 5, in yet another embodiment the electric sanding handheld tool of the invention further includes a dust cover 60 coupled with the host body 10 and partially covering the sanding element 23. Moreover, the dust cover 60 includes a hood 601 and an opening 602 formed on the hood 601 to allow the sanding element 23 to pass through, thereby confines dust generated by the sanding element 23 during sanding process from spreading around. In addition, the hood 601 has an air inlet 602 corresponding to the second transmission portion 213, and the electric sanding handheld tool also includes an auxiliary air fan 70 coupled with the second transmission portion 213 and corresponding to the air inlet 603 and driven by the transmission shaft 211 to draw cold airflow through the air inlet 603 to dispel operation heat generated by the sanding element 23 through the opening 602, thereby can also provide cooling to the sanding element 23 and another bearing 215 located on the second transmission portion 213. The flow path of the cold airflow is marked by notation 80 in FIG. 3. The airflow path thus formed can further confine the dust generated by the sanding element 23 during sanding process from spreading around.

As a conclusion, the invention mainly includes a host body and a sanding assembly. The sanding assembly is installed in the host body and includes an electric motor, a circuit module and a sanding element. The circuit module and the electric motor are interposed by a cooling fan moving synchronously with the electric motor. The host body has at least one air outlet corresponding to the cooling fan, and at least one air inlet corresponding to either of the circuit module and the electric motor so that while the electric motor is driven by the circuit module the sanding element and the cooling fan also are driven at the same time. The cooling fan spins to draw in cold airflow through the air inlet to pass through the airflow orifice to dispel the operation heat generated by the electric motor and the circuit module through the air outlet, thus can provide improvement to resolve the problem of heat accumulation of the conventional sanding hand tool caused by switching from pneumatic driving to electrical driving.

## Claims

1. An electric sanding handheld tool, comprising:
a host body (10) including a body (11) and handgrip (12) extended from the body (10), the body (11) including a housing space (111) inside; and
a sanding assembly (20) including an electric motor (21) located in the housing space (111) to output driving power through a transmission shaft (211) and a circuit module (22) to control operation of the electric motor (21), wherein the circuit module (22) includes a control unit (221) located in the body (11) and coaxial with the electric motor (21) and a power supply unit (222) located in the handgrip (12) and connected to the control unit (221) to get working power from the external power to perform power transformation; one end of the transmission shaft (211) where the control unit (221) is located being defined as a first transmission portion (212) and another end of the transmission shaft (211) opposing the control unit (221) being defined as a second transmission portion (213), the second transmission portion (213) being coupled with a sanding element (23) which is exposed outside the host body (10) and driven by the transmission shaft (211) to generate sanding motion;
further comprising a cooling fan (30) including a baseboard (31), an axial coupling portion (32) located on the baseboard (31) and coupled with the first transmission portion (212), a plurality of vanes (33) located on the baseboard (31) and centered about the axial coupling portion (32) in a radial fashion,
the body (11) of the host body (10) including at least one air outlet (112) opened nearby to the vanes (33) and at least one air inlet (113, 114) opened nearby to either of the control unit (221) and the electric motor (21)
**characterized in that** the cooling fan (30) is located on the first transmission portion (212) and disposed between the control unit (221) and the electric motor (21), wherein
the cooling fan (30) further comprises a plurality of connection ribs (35) centered about the axial coupling portion (32) and an airflow orifice (34) located on the baseboard (31), wherein
the airflow orifice (34) is disposed around the axial coupling portion (32) and defined by the vanes (33) and the connection ribs (35), wherein
the transmission shaft (211) is driven by the control unit (221) to synchronously drive the sanding element (23) and the cooling fan (30) through the first transmission portion (212) and the second transmission portion (213) so that the vanes (33) spin to draw cold airflow through the air inlet (113, 114) to pass through the airflow orifice (34) to dispel operation heat generated by the electric motor (21) and the control unit (221) through the air outlet (112).

2. The electric sanding handheld tool of claim 1, wherein the body (11) of the host body (10) has a first air inlet (113) corresponding to the electric motor (21) and a second air inlet (114) corresponding to the control unit (221) .

3. The electric sanding handheld tool of claim 1 or 2, wherein the circuit module (22) includes a heat transmission element (223) facing the cooling fan (30) to disperse the operation heat generated by the circuit module (22) through the cold airflow drawn via the vanes (33).

4. The electric sanding handheld tool of any of the preceding claims, wherein the electric motor (21) includes a bearing (214) on at least either one of the first transmission portion (212) and the second transmission portion (213).

5. The electric sanding handheld tool of any of the preceding claims, wherein the baseboard (31) is located at one side of the cooling fan (30) facing the circuit module (22), and the vanes (33) are located at another side facing the electric motor (21).

6. The electric sanding handheld tool of any of claims 1 to 5, wherein the baseboard (31) is located at one side of the cooling fan (30) facing the electric motor (21), and the vanes (33) are located at another side facing the circuit module (22).

7. The electric sanding handheld tool of any of the preceding claims, wherein the sanding element (23) is a sand cloth belt which is perpendicular to the axial direction of the electric motor (21) and extended to expose outside the host body (10).

8. The electric sanding handheld tool of any of the preceding claims, further including a dust cover (60) coupled with the host body (10) and partially covered the sanding element (23).

9. The electric sanding handheld tool of claim 8, wherein the dust cover (60) includes a hood (601) and an opening (602) formed on the hood (601) to allow the sanding element (23) to pass through.

10. The electric sanding handheld tool of claim 9, wherein the hood (601) includes an air inlet (603) corresponding to the second transmission portion (213), and the electric sanding handheld tool includes an auxiliary air fan (70) which is coupled with the second transmission portion (213) and corresponding to the air inlet (603) and driven by the transmission shaft (211) to draw the cold airflow through the air inlet (603) to dispel operation heat generated by the sanding element (23) through the opening (602).

## Patentansprüche

1. Tragbares elektrisches Schleifwerkzeug, umfassend:
einen Hauptkörper (10), der einen Körper (11) und einen Handgriff (12) umfasst, der sich von dem Körper (10) erstreckt, wobei der Körper (11) einen Gehäuseraum (111) im Inneren aufweist; und
eine Schleifanordnung (20), die einen Elektromotor (21), der in dem Gehäuseraum (111) angeordnet ist, um eine Antriebsleistung über eine Getriebewelle (211) abzugeben, und ein Schaltungsmodul (22) zum Steuern des Betriebs des Elektromotors (21) beinhaltet, wobei das Schaltungsmodul (22) eine Steuereinheit (221), die in dem Körper (11) angeordnet und koaxial zum Elektromotor (21) angeordnet ist, und eine Stromversorgungseinheit (222) aufweist, die in dem Handgriff (12) angeordnet und mit der Steuereinheit (221) verbunden ist, um eine Betriebsspannung von der externen Spannung zu erhalten, um eine Spannungstransformation durchzuführen; wobei ein Ende der Getriebewelle (211), an dem sich die Steuereinheit (221) befindet, als ein erster Getriebeabschnitt (212) und ein anderes der Steuereinheit (221) gegenüberliegendes Ende der Getriebewelle (211) als ein zweiter Getriebeabschnitt (213) definiert ist, wobei der zweite Getriebeabschnitt (213) mit einem Schleifelement (23) gekoppelt ist, das außerhalb des Grundkörpers (10) freiliegt und von der Getriebewelle (211) angetrieben wird, um eine Schleifbewegung zu erzeugen;
weiterhin umfassend ein Kühlgebläse (30) mit einer Grundplatte (31), einem axialen Kupplungsabschnitt (32), der auf der Grundplatte (31) angeordnet und mit dem ersten Getriebeabschnitt (212) gekoppelt ist, eine Mehrzahl von Flügeln (33), die auf der Grundplatte (31) angeordnet und radial um den axialen Kupplungsabschnitt (32) herum zentriert sind,
wobei der Körper (11) des Hauptkörpers (10) mindestens einen Luftauslass (112), der in der Nähe der Flügel (33) geöffnet ist, und mindestens einen Lufteinlass (113, 114) aufweist, der in der Nähe der Steuereinheit (221) oder des Elektromotors (21) geöffnet ist.
**dadurch gekennzeichnet, dass** das Kühlgebläse (30) auf dem ersten Getriebeabschnitt (212) angeordnet und zwischen der Steuereinheit (221) und dem Elektromotor (21) angeordnet ist, wobei
das Kühlgebläse (30) weiterhin eine Mehrzahl von Verbindungsrippen (35) umfasst, die um den axialen Kupplungsabschnitt (32) herum zentriert sind, und eine Luftströmungsöffhung (34), die auf der Grundplatte (31) angeordnet ist, wobei
die Luftströmungsöffhung (34) um den axialen Kupplungsabschnitt (32) herum angeordnet und durch die Flügel (33) und die Verbindungsrippen (35) definiert ist, wobei
die Getriebewelle (211) durch die Steuereinheit (221) betrieben wird, um das Schleifelement (23) und das Kühlgebläse (30) synchron über den ersten Getriebeabschnitt (212) und den zweiten Getriebeabschnitt (213) anzutreiben, so dass sich die Flügel (33) drehen, um einen kalten Luftstrom durch den Lufteinlass (113, 114) zu ziehen, um durch die Luftströmungsöffnung (34) zu strömen, um die von dem Elektromotor (21) und von der Steuereinheit (221) erzeugte Betriebswärme durch den Luftauslass (112) abzuführen.

2. Tragbares elektrisches Schleifwerkzeug nach Anspruch 1, worin der Körper (11) des Hauptkörpers (10) einen ersten Lufteinlass (113) entsprechend dem Elektromotor (21) und einen zweiten Lufteinlass (114) entsprechend der Steuereinheit (221) aufweist.

3. Tragbares elektrisches Schleifwerkzeug nach Anspruch 1 oder 2, wobei das Schaltungsmodul (22) ein dem Kühlgebläse (30) zugewandtes Wärmeübertragungselement (223) aufweist, um die von dem Schaltungsmodul (22) erzeugte Betriebswärme durch den über die Flügel (33) angesaugten Kaltluftstrom abzuführen.

4. Tragbares elektrisches Schleifwerkzeug nach einem der vorhergehenden Ansprüche, worin der Elektromotor (21) ein Lager (214) an dem ersten Getriebeabschnitt (212) und/oder an dem zweiten Getriebeabschnitt (213) aufweist.

5. Tragbares elektrisches Schleifwerkzeug nach einem der vorstehenden Ansprüche, wobei die Grundplatte (31) auf einer dem Schaltungsmodul (22) zugewandten Seite des Kühlgebläses (30) angeordnet ist und die Flügel (33) auf einer anderen dem Elektromotor (21) zugewandten Seite angeordnet sind.

6. Tragbares elektrisches Schleifwerkzeug nach einem der Ansprüche 1 bis 5, wobei die Grundplatte (31) auf einer dem Elektromotor (21) zugewandten Seite des Kühlgebläses (30) angeordnet ist und die Flügel (33) auf einer anderen dem Schaltungsmodul (22) zugewandten Seite angeordnet sind.

7. Tragbares elektrisches Schleifwerkzeug nach einem der vorstehenden Ansprüche, wobei das Schleifelement (23) ein Sandgewebeband ist, das senkrecht zur Axialrichtung des Elektromotors (21) verläuft und sich so erstreckt, dass es außerhalb des Hauptkörpers (10) freiliegt.

8. Tragbares elektrisches Schleifwerkzeug nach einem der vorhergehenden Ansprüche, weiterhin umfassend eine Staubabdeckung (60), die mit dem Hauptkörper (10) verbunden ist und das Schleifelement (23) teilweise abdeckt.

9. Tragbares elektrisches Schleifwerkzeug nach Anspruch 8, worin die Staubabdeckung (60) eine Haube (601) und eine an der Haube (601) ausgebildete Öffnung (602) beinhaltet, sodass sich das Schleifelement (23) durch diese hindurch erstrecken kann.

10. Tragbares elektrisches Schleifwerkzeug nach Anspruch 9, wobei die Haube (601) einen Lufteinlass (603) entsprechend dem zweiten Getriebeabschnitt (213) aufweist, und wobei das tragbares elektrische Schleifwerkzeug ein zusätzliches Kühlgebläse (70) aufweist, das mit dem zweiten Getriebeabschnitt (213) gekoppelt ist und dem Lufteinlass (603) entspricht und von der Getriebewelle (211) angetrieben wird, um den kalten Luftstrom zu ziehen.

## Revendications

1. Un outil de ponçage portable électrique, comprenant:
un corps d'accueil (10) comprenant un corps (11) et une poignée (12) s'étendant depuis le corps (10), le corps (11) comprenant un espace de logement (111) à l'intérieur ; et
un ensemble de ponçage (20) comprenant un moteur électrique (21) situé dans l'espace de logement (111) pour délivrer une puissance d'entraînement par l'intermédiaire d'un arbre de transmission (211) et un module de circuit (22) pour commander le fonctionnement du moteur électrique (21), dans lequel le module de circuit (22) comporte une unité de commande (221) située dans le corps (11) et coaxiale avec le moteur électrique (21) et une unité d'alimentation électrique (222) située dans la poignée (12) et connectée à l'unité de commande (221) pour obtenir de la puissance de travail de la part de l'alimentation électrique externe pour effectuer une transformation d'énergie ; une extrémité de l'arbre de transmission (211) dans laquelle l'unité de commande (221) est située est définie comme étant une première partie de transmission (212) et une autre extrémité de l'arbre de transmission (211) opposée à l'unité de commande (221) étant définie comme une seconde partie de transmission (213), la seconde partie de transmission (213) étant couplée à un élément de ponçage (23) qui est exposé à l'extérieur du corps d'accueil (10) et entraîné par l'arbre d'entraînement (211) pour générer un mouvement de ponçage ;
comprenant en outre un ventilateur de refroidissement (30) comportant une carte de base (31), une partie de couplage axial (32) située sur la plaque de base (31) et couplée à la première partie de transmission (212), une pluralité de pales (33) situées sur la carte de base (31) et centrées de manière radiale autour de la partie de couplage axial (32),
le corps (11) du corps d'accueil (10) comprenant au moins une sortie d'air (112) ouverte près des pales (33) et au moins une entrée d'air (113, 114) ouvertes proches de l'unité de commande (221) et du moteur électrique (21)
**caractérisé en ce que** le ventilateur de refroidissement (30) est situé sur la première partie de transmission (212) et disposé entre l'unité de commande (221) et le moteur électrique (21), dans lequel
le ventilateur de refroidissement (30) comporte en outre une pluralité de nervures de raccordement (35) centrées autour de la partie de couplage axiale (32) et un orifice d'écoulement d'air (34) situé sur la carte de base (31), dans lequel
l'orifice d'écoulement (34) est disposé autour de la partie de couplage axiale (32) et définie par les pales (33) et les nervures de raccordement (35), dans lequel
l'arbre de transmission (311) est entraîné par l'unité de commande (221) pour entraîner de manière synchrone l'élément de ponçage (23) et le ventilateur de refroidissement (30) à travers la première partie de transmission (212) et la deuxième transmission partie (213) de sorte que les pales (33) tournent pour aspirer un flux d'air froid à travers l'entrée d'air (113, 114) pour passer à travers l'orifice d'écoulement (34) pour dissiper la chaleur de fonctionnement générée par le moteur électrique (21) et l'unité de commande (221) à travers la sortie d'air (112).

2. L'outil de ponçage portable électrique de la revendication 1, dans lequel le corps (11) du corps d'accueil (10) a une première entrée d'air (113) correspondant au moteur électrique (21) et une seconde entrée d'air (114) correspondant à l'unité de commande (221).

3. L'outil de ponçage portable électrique de la revendication 1 ou 2, dans lequel l'unité de commande (22) comprend un élément de transmission de chaleur (223) faisant face au ventilateur de refroidissement (30) pour disperser la chaleur de fonctionnement générée par le module de circuit (22) à travers le flux d'air froid écoulé par les pales (33).

4. L'outil de ponçage portable électrique de l'une quelconque des revendications précédentes, dans lequel le moteur électrique (21) comprend un roulement (214) sur au moins l'une ou l'autre de la première partie de transmission (212) et de la seconde partie de transmission (213).

5. L'outil de ponçage portable électrique de l'une quelconque des revendications précédentes, dans lequel la carte de base (31) est située sur un côté du ventilateur de refroidissement (30) faisant face au module de circuit (22), et les pales (33) sont situées sur un autre côté faisant face au moteur électrique (21).

6. L'outil de ponçage portable électrique de l'une quelconque des revendications 1 à 5, dans lequel la carte de base (31) est située sur un côté du ventilateur de refroidissement (30) faisant face au moteur électrique (21), et les pales (33) sont situées sur un autre côté faisant face au module de circuit (22).

7. L'outil de ponçage portable électrique de l'une quelconque des revendications précédentes, dans lequel l'élément de ponçage (23) est une bande de toile de sable qui est perpendiculaire à la direction axiale du moteur électrique (21) et étendue pour exposer à l'extérieur du corps d'accueil (10).

8. L'outil de ponçage portable électrique de l'une quelconque des revendications précédentes, comprenant en outre un couvercle anti-poussière (60) couplé au corps d'accueil (10) et recouvrant partiellement l'élément de ponçage (23).

9. L'outil de ponçage portable électrique de la revendication 8, dans lequel le couvercle anti-poussière (60) comprend un capot (601) et une ouverture (602) formée sur le capot (601) pour permettre à l'élément de ponçage (23) de passer au travers.

10. L'outil de ponçage portable électrique de la revendication 9, dans lequel le capot (601) comprend une entrée d'air (603) correspondant à la deuxième partie de transmission (213), et l'outil portatif de ponçage électrique comprend un ventilateur auxiliaire (70) qui est couplé à la seconde partie de transmission (213) et correspondant à l'entrée d'air (603) et entraînée par l'arbre de transmission (211) pour aspirer le flux d'air froid au travers l'entrée d'air (603) afin de dissiper la chaleur de fonctionnement générée par l'élément de ponçage (23) à travers l'ouverture (602).
